# EUROPEAN PATENT SPECIFICATION

(11) **EP 3 050 437 B1**
(45) Date of publication and mention of the grant of the patent: **27.02.2019**
(21) Application number: 14849004.8
(22) Date of filing: 14.08.2014
(51) Int. Cl.: A23L 2/38, A23L 29/30, A23L 2/52, A23L 29/269, A23L 11/00, A23L 19/00

(54) **GLUCAN BEVERAGE AND PREPARATION METHOD THEREFOR**
GLUCANGETRÄNK UND HERSTELLUNGSVERFAHREN DAFÜR
BOISSON AU GLUCANE ET SON PROCÉDÉ DE PRÉPARATION

(30) Priority: 25.09.2013 CN 201310443498
(43) Date of publication of application: 03.08.2016
(73) Proprietor: Bright Dairy & Food Co., Ltd, Shanghai 201103 (CN)
(72) Inventor: HAN, Jin, Shanghai 201103 (CN); GUO, Benheng, Shanghai 201103 (CN); WU, Zhengjun, Shanghai 201103 (CN); HANG, Feng, Shanghai 201103 (CN); WU, Jiang, Shanghai 201103 (CN); MA, Chengjie, Shanghai 201103 (CN)
(74) Representative: Isern Patentes y Marcas S.L.
(86) International application number: PCT/CN2014/084347
(87) International publication number: WO 2015/043326

(56) References cited:
- CN-A- 1 161 175
- CN-A- 101 028 034
- CN-A- 102 100 252
- CN-A- 103 013 891
- CN-A- 103 190 665
- CN-A- 103 468 611
- CN-A- 103 478 839
- GB-A- 749 515
- JP-A- 2006 028 047
- YOON, KYUNG YOUNG ET AL.: "Probiotication of Tomato Juice by Lactic Acid Bacteria", THE JOURNAL OF MICROBIOLOGY, vol. 42, no. 4, 1 December 2004 (2004-12-01), pages 315-318, XP008184229,
- SILVA ISABEL MOREIRA DA ET AL: "Cashew juice containing prebiotic oligosaccharides", JOURNAL OF FOOD SCIENCE AND TECHNOLOGY, SPRINGER (INDIA) PRIVATE LTD, INDIA, vol. 51, no. 9, 5 April 2012 (2012-04-05), pages 2078-2084, XP035384497, ISSN: 0022-1155, DOI: 10.1007/S13197-012-0689-9 [retrieved on 2012-04-05]
- DATABASE FSTA [Online] INTERNATIONAL FOOD INFORMATION SERVICE (IFIS), FRANkFURT-MAIN, DE; 1990, SHIEH Y M ET AL: "Malolactic fermentation by immobilized Leuconostoc sp. M-1.", XP002769220, Database accession no. FS-1992-01-H-0059 & SHIEH Y M; TSAY S S: "Malolactic fermentation by immobilized Leuconostoc sp. M-1", JOURNAL OF THE CHINESE AGRICULTURAL CHEMICAL SOCIETY, vol. 28, no. 3, 1990, pages 246-257, XP008184234,
- NOREDDINE BENKERROUM ET AL: "Development and Use of a Selective Medium for Isolation of Leuconostoc spp. from Vegetables and Dairy Productst", APPLIED AND ENVIRONMENTAL MICROBIOLOGY, vol. 59, no. 2, 1 January 1993 (1993-01-01), pages 607-609, XP055364069,
- LAZIC M L ET AL: "Effect of pH and aeration on dextran production by Leuconostoc mesenteroides", ENZYME AND MICROBIAL TECHNOLOGY, STONEHAM, MA, US, vol. 15, no. 4, 1 April 1993 (1993-04-01), pages 334-338, XP023679783, ISSN: 0141-0229, DOI: 10.1016/0141-0229(93)90160-4 [retrieved on 1993-04-01]
- TALITA LOPES HONORATO ET AL.: 'Fermentation of cashew apple juice to produce high added value products' WORLD J MICROBIOL BIOTECHNOL vol. 23, 07 April 2007, pages 1409 - 1415, XP019535167

## Description

### Technical Field

The present invention discloses a glucan beverage and preparation method thereof.

### Background

Polysaccharides are macromolecule polymers composed of monosaccharides united by glycoside linkages. The results show that polysaccharides have prebiotic functions of immunomodulatory, antiviral, anticancer, hypoglycemic, hypotensive, etc. In nature, polysaccharides are mainly widespread in microorganisms, higher plants, animals, lichens and algae, wherein the polysaccharides from microbial sources, especially the extracellular polysaccharides for a class of carbohydrate compounds secreted outside the cell wall during the growth and metabolism of some specific microorganisms. The polysaccharides attached at the microbial cell wall extracellularly are known as capsular polysaccharide; however, the mucus polysaccharide exists in the form of infiltrating in the growth environment.

It is generally known that Leuconostoc is a kind of lactic acid bacteria of high yield of extracellular polysaccharide, wherein the Leuconostocmesenteroides can synthesize a variety types of glucan (a glucan polymer composed of monosaccharide unites linked by α-1,3, α-1,4 or α-1,6 glycoside bonds). Some related researches prove that the glucan synthesized by Leuconostocmesenteroides has the clinical effects of immunomodulatory, anticancer, etc.

However, the complex composition of the fermentation base materials and the shortage of the sources of part components in the process of preparing glucan from Leuconostoc lead to the high cost of fermentation base materials; by adopting these fermentation base materials, the organic solvent of chloroform, n-butanol, trifluorotrichloroethane, trichloroacetic acid, etc were added in the process of extraction and preparation polysaccharides to remove proteins and other interfering substances. These factors have adverse effects on the cost of commercial production, the quality of polysaccharides and the safety of the application in food and medical field.

Throughout the domestic beverage market, though there are many kinds of functional drinks, such as Red Bull (supplying energy), pulse (supplying vitamin), but the beverage with main functional components of the polysaccharide is few. Furthermore, the related existing research of containing polysaccharide beverage reported that the related sources of polysaccharides are plant polysaccharide and the application methods are artificially added into the beverages. The narrow source of polysaccharides and the application method of artificial adding make these kinds of products lack of innovation and safety.

Talita Lopes Honorato et al., World J. Microbiol. Biotechnol., vol.23, April 2007, p.1409-1415 and Silva Isabel Moreira Da et al., Journal of Food Science and Technology, vol.51, April 2012, p.2078-2084 teach that cashew apple juice can be employed as a substrate for Leuconostoc mesenteroides to produce dextran.

CN103190665 discloses a preparation method of a vegetable and fruit fermented beverage using as a fermentation medium a mixture of fruit and vegetables including tomato juice.

JP2006028047 discloses a culture medium comprising fruit juices such as tomato juice obtained by lactic acid bacterium such as Leuconostoc mesenteroides.

Therefore, it is one of the trends to find a fermented beverage with the polysaccharide produced by microbial self-metabolism as the functional component in the development of a new functional beverage in the future. This problem needs to be solved urgently.

### Summary of the Invention

The present invention intends to solve the technical problems which are to overcome the narrow sources of polysaccharides from plant in the existing polysaccharides beverage, lacking safety for the application method of artificial adding to obtain products after the specific extracting, especially for the blank defects of beverage with main functional components of the polysaccharide in the existing market. The present invention provides a glucan beverage and preparation method thereof with low cost of production, simple process and widely use in industry.

The present invention solves the technical issues above through the following technical solution:
The method for preparing a glucan beverage of the present invention comprises the following steps:
(1) inoculating fermentation bacterial species of Leuconostocmesenteroides into a fermentation medium, and carrying out aerobic cultivation to obtain a fermentation broth;
(2) uniformly mixing the fermentation broth and a blending liquid containing a sweetener and an acidulant, and homogenizing and sterilizing;
wherein the fermentation medium contains sucrose and tomato juice aqueous solution; the concentration of the tomato juice in the tomato juice aqueous solution is 40%∼100% volume percent; the pH of the fermentation medium is adjusted to 6.0∼ 8.0 with a base; and the volume percent of the content of the fermentation broth in the total amount of the glucan beverage is 15.5%∼66.6%.

According to the present invention, the ratio of mass of sucrose to volume of tomato juice is preferably 1g:20mL∼1g:5mL, more preferably 1g:10mL∼1g:5mL, even more preferably 3g:20mL.

According to the present invention, the concentration of the tomato juice in the tomato juice aqueous solution is preferably 100% volume percent.

According to the present invention, the pH of the fermentation medium is preferably adjusted to 7.0 with a base. Wherein the base is conventional in the art, typically food grade base, preferably one or more of Na₂CO₃, NaHCO₃ and NaOH.

According to the present invention, the tomato juice in the tomato juice aqueous solution is obtained by adopting conventional preparation method in the art, typically comprising the following steps of: washing and peeling ripe tomatoes, mechanical breaking and separating to obtain a supernatant. The physical and chemical indexes of the tomato juice obtained by the preparation method are as follows: the solid content is 3.28g/100mL∼4.04g/100mL; the ash content is 0.46g/100mL∼0.59g/100mL; the protein is 0.39g/100mL∼0.52g/100mL; the fat is 0.014g/100mL∼0.020g/100mL; the carbohydrate is 2.42g/100mL∼2.88g/100mL.

Wherein the separating is the conventional separating technique in the art, preferably one or more of filtering, suction filtering and centrifuging. The filter medium is conventional in the art, preferably multi-layer gauze or nonwoven. The centrifuging is the conventional operation in the art, preferably at 2000g∼3000g for 10min∼20min.

According to the present invention, the fermentation medium is obtained by adopting conventional preparation method in the art, typically comprising the following steps of: uniformly mixing and dissolving the sucrose and the tomato juice aqueous solution, and sterilizing under the temperature of 95∼125C for 5min∼ 30min, preferably for 20min∼30min.

The fermentation bacterial species in the step (1) is the conventional Leuconostocmesenteroides, preferably one or more of Leuconostocmesenteroides LM 57, Leuconostocmesenteroides LM 79, Leuconostocmesenteroides LD 106 and Leuconostocmesenteroides BD 1710 under the accession number CGMCC NO.6432, more preferably Leuconostocmesenteroides BD 1710 under the accession number CGMCC NO.6432.

The fermentation bacterial species is inoculated as seed liquid in the process of inoculating in the step (1), wherein the number of living bacteria is 1.0×10⁹∼ 3.0×10⁹CFU/mL.

The inoculating in the step (1) is the conventional operation in the art, wherein the fermentation bacterial species is preferably inoculated in an amount of 0.5%∼ 4.0%, more preferably 2.0%∼4.0%, even more preferably 2.0%, wherein the percentage is the volume of seed liquid to the volume of fermentation medium.

The temperature of aerobic cultivation in the step (1) is the conventional operation in the art, preferably at 25°C∼34°C, more preferably at 25°C∼31°C, even more preferably at 28°C. The time required for the aerobic cultivation is preferably 12h∼54h, more preferably for 30h∼54h, even more preferably for 48h. The aerobic cultivation is preferably carried out by shaking culture or aeration in a fermentor.

The conventional blending liquid in the art in the step (2), containing the sweetener and the acidulant, is the solution obtained by mixing the sweetener, the acidulant and water.

The sweetener in the step (2) is conventional in the art, preferably one or more of white granulated sugar, syrup and artificial sweetener; wherein the artificial sweetener is conventional in the art, preferably one or more of aspartame, sodium cyclamate and acesulfame; the amount of the artificial sweetener used is conventional in the art, preferably such that the sweetness of the glucan beverage is 5%∼10% that of sucrose.

The acidulant in the step (2) is conventional in the art, preferably one or more of citric acid, malic acid, tartaric acid, lactic acid and acetic acid; the titration acidity of the glucan beverage is preferably adjusted in a range of 70°T∼80°T with the amount of the acidulant used conventionally in the art.

The homogenizing in the step (2) is the conventional operation in the art, preferably homogenized in a range of 15∼30Mpa.

The sterilizing in the step (2) is the conventional operation in the art, wherein the temperature of the sterilizing is preferably in a range of 95°C∼ 125°C; the required time of the sterilizing is preferably in a range of 5min∼ 30min.

The present invention further provides a glucan beverage prepared by the afore-mentioned method for preparing the glucan beverage, wherein:
- the glucan content in the glucan beverage is higher than or equal to 0.5 % (W/V),
- the sweetness of the glucan beverage is 5% - 10% that of sucrose,
- the fermentation broth in the total amount of the glucan beverage is 15.5-66.6 volume percent,
- the acidity of the glucan beverage is adjusted in a range of 70°T - 80°T.

The reagent and the raw materials employed in the present invention are available commercially.

The effects of the positive progress of the present invention are:
1. The present invention provides a glucan beverage, wherein the fermentation medium adopted in the preparation process is wide resource, low cost, safety and nature; the glucan obtained after fermentation of the fermentation bacterial species of Leuconostocmesenteroides can be eaten directly as a functional drink after diluting and flavoring, which breaks the current situation of using glucan rarely as a component in the functional drinks in existing markets.
2. The glucan in the beverage of the present invention comes from microbes, is present in the fermentation base material itself. Compared with the existing research related to the polysaccharide beverage reported that most of polysaccharide were come from plants and added into beverages artificially, the resource and the simplified manufacturing process of the beverage related in the present invention improve the creativity and safety of the relative products with a bright prospect.

### Detail Description of the Drawing

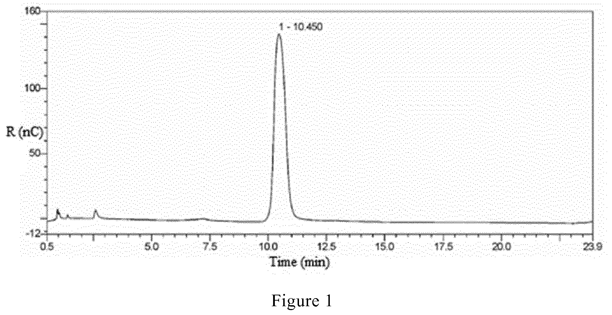

FIG. 1 shows a chromatogram of the composition of sugar groups in the polysaccharide sample of the glucan beverage in the embodiment 1.

### Detail Description of the Invention

Hereinafter, the present invention is to be described in further detail by using examples; however the present invention is not limited in the scope of these embodiments. The experimental methods without specific conditions in the following embodiments are selected in accordance with the conventional processed and conditions or the product instructions.

The room temperature in the present invention means the temperature of the operating room for testing which is usually at 25°C. The fermentation bacterial species in the following embodiments is Leuconostocmesenteroides BD 1710 under the accession number CGMCC NO.6432, or Leuconostocmesenteroides LM 57, Leuconostocmesenteroides LM 79, Leuconostocmesenteroides LD 106 provided by Danisco (China) Co. Ltd..

In the following embodiments:
The preparation of tomato juice X1, X2, X3, X4: washing and peeling ripe tomatoes, mechanical breaking; the supernatants are obtained by filtering, suction filtering, separating, centrifuging at 3000g for 10min or 2000g for 20 min respectively.

The preparation of fermentation medium S1, S2, S3 and S4: mixing the sucrose and the tomato juice aqueous solution by the ratio of mass of sucrose to volume of tomato juice of 3g:20mL, 1g:5mL, 1g:10mL, 1g:20mL respectively; heating until the sucrose is dissolved and cooling to the room temperature; adjusting the pH value to 7.0 with Na₂CO₃, 6.0 with NaHCO₃, 7.5 with NaOH, 8.0 with NaOH respectively; sterilizing under the temperature of 121°C for 20min, 95°Cfor 30min, 125°C for 5min, 100°C for 15min respectively. Wherein the concentration of the tomato juice in the tomato juice aqueous solution is 100%, 40%, 80%, 60% volume percent respectively, the tomato juice are tomato juice X1, X2, X3, X4 respectively.

The preparation of fermentation bacterial species (seed liquid) Z1: dissolving the lyophilized powder of Leuconostocmesenteroides BD 1710 in a small amount of sterile distilled water, picking up with a inoculation loop and streaking on a M17 sucrose medium (replacing 5% (w/v) of lactose in the M17 medium with 5.0% (w/v) sucrose, OXOIDLTD., UK), aerobic culturing under the temperature of 28°C for 24h, picking up a single colony and inoculating into 1mL of the M17 sucrose medium, uniformly dispersing the colony in the liquid medium by using a vortexer, shaking culturing under the temperature of 28°C at 180rpm for 24h, picking up and inoculating in an amount of 2.0% (v/v) into 50mL of the M17 sucrose medium, shaking culturing under the temperature of 28°C at 180rpm for 24h again, centrifuging at 10,000g for 10min, removing the supernatant, washing the bacteria 2 times with sterile distilled water, suspending in the sterile distilled water of the original medium volume; the number of living bacteria is 2.0×10⁹CFU/mL approximately.

The fermentation bacterial species (seed liquid) Z2, Z3, Z4 are prepared same as the process shown above by the following microbes, Leuconostocmesenteroides LM 57, Leuconostocmesenteroides LM 79, Leuconostocmesenteroides LD 106 respectively; wherein the number of living bacteria is 1.0×10⁹CFU/mL, 2.0×10⁹CFU/mL, 3.0×10⁹CFU/mL respectively.

**Extraction of glucan from fermentation broth in effect verification:** diluting the fermentation broth with 4 times fermentation broth volume of sterile water, centrifuging at 15,000g for 10min to obtain the supernatant, adding 3 times supernatant volume of anhydrous ethanol into the supernatant and standing overnight, centrifuging at 15,000g for 10min, collecting the precipitates and dissolving in water to obtain the glucan aqueous solution, vacuum freeze drying to obtain the glucan.

**Extraction of glucan from glucan beverage in effect verification:** centrifuging the lactobacillus beverage at 15,000g for 10min to obtain the supernatant and removing the inactivated dead bacteria, adding 3 times supernatant volume of anhydrous ethanol into the supernatant and standing overnight, centrifuging at 15,000g for 10min, collecting the precipitates and dissolving in water to obtain the glucan aqueous solution, vacuum freeze drying to obtain the glucan.

### Embodiment 1

### 1. The preparation of glucan beverage

(1) inoculating the seed liquid Z1 of fermentation bacterial species of Leuconostocmesenteroides BD 1710 in an amount of 2.0% (v/v) into the fermentation medium prepared by the above method, that is the fermentation medium S1, wherein the ratio of mass of sucrose to volume of tomato juice is 3g:20mL, the concentration of the tomato juice in the tomato juice aqueous solution is 100%, and the pH value is 7.0; shaking culturing under the temperature of 28°C at 180rpm for 48h to obtain the fermentation broth after fermentation. The concentration of the glucan in the fermentation broth is determined to be 3.22% (w/v).
(2) completely dissolving white granulated sugar and citric acid in water at 50°C to obtain a blending liquid, uniformly mixing the above fermentation broth and the blending liquid at a ratio of 1:5.44 (v/v) and homogenizing at the pressure of 15MPa, sterilizing under the temperature of 95°C for 30min, filling to obtain the products of lactobacillus beverage of the present embodiment.

The content of glucan in the lactobacillus beverage enriched with glucan prepared by the present embodiment is determined to be 0.50%, the sweetness is 10% that of sucrose, the acidity is 80°T, the content of the fermentation broth in the total amount of the beverage is 15.5% volume percent.

### 2. The detection of component

(1) The configuration of standard sample:
   Polysaccharide hydrolyzing: drawing 100µL polysaccharide sample solution of 4mg/mL∼5mg/mL into a 5mL graduated tube with stopper, adding 100µL 4moL/LTFA, filing the tube with N₂ and sealing the tube, hydrolyzing for 2h in an oven at 110°C; opening the tube after cooling, adding 200µL methanol and blowing to dry with N₂, repeating adding methanol and blowing to dry with N₂ for 3 times, removing TFA, dissolving the residue in water and adjusting the final volume to 5mL, filtrating with 0.45µm micro-pore filter membrane for sample injection analysis.
(2) Chromatographic conditions
   Column: CarboPacPA203mmi.di×150mm;
   Mobile phase: A. H₂O; B. 250mmol/LNaOH; 1mol/LNaAc;
   Ternary gradient elution: flow rate 0.5mL/min; Integrated pulsed amperometric detector;
   Au working electrode: Ag/AgCl reference electrode
   Injecting volume: 20µL; Column temperature: 30°C.
(3) extracting the glucan sample from the fermentation broth in the step (1) of preparing glucan beverage as described above, then determining monosaccharide composition of polysaccharide by High Performance Anion Chromatography.

The chromatogram analysis result of the composition of sugar groups in the polysaccharide sample of Leuconostocmesenteroides BD 1710 in Figure 1 shows that the polysaccharide has a single absorption peak at 10.450min and the retention time for that peak is same as the retention time of glucose standard. Thus, the polysaccharide produced by Leuconostocmesenteroides is composed of a single sugar group of glucose, which is glucan.

### Embodiment 2

(1) inoculating the seed liquid Z2 in an amount of .5% (v/v) into the fermentation medium prepared by the above method, that is the fermentation medium S2, wherein the ratio of mass of sucrose to volume of tomato juice is 4g:20mL, the concentration of the tomato juice in the tomato juice aqueous solution is 40%, and the pH value is 6.0; adopting aeration in a fermentor under the temperature of 34°C for 54h to obtain the fermentation broth after fermentation. The concentration of the glucan in the fermentation broth is determined to be 1.05% (w/v).
(2) completely dissolving white granulated sugar, citric acid and lactic acid in water at 50°C to obtain a blending liquid, uniformly mixing the above fermentation broth and the blending liquid at a ratio of 1:1 (v/v) and homogenizing at the pressure of 30MPa, sterilizing under the temperature of 100°C for 20min, filling to obtain the products of lactobacillus beverage of the present embodiment.

The content of glucan in the lactobacillus beverage enriched with glucan prepared by the present embodiment is determined to be 0.53%, the sweetness is 5% that of sucrose, the acidity is 70°T, the content of the fermentation broth in the total amount of the beverage is 50% volume percent.

### Embodiment 3

(1) inoculating the seed liquid Z3 in an amount of 1.0% (v/v) into the fermentation medium prepared by the above method, that is the fermentation medium S3, wherein the ratio of mass of sucrose to volume of tomato juice is 1g:10mL, the concentration of the tomato juice in the tomato juice aqueous solution is 80%, and the pH value is 7.5; shaking culturing under the temperature of 31 °C at 180rpm for 30h to obtain the fermentation broth after fermentation. The concentration of the glucan in the fermentation broth is determined to be 1.68% (w/v).
(2) completely dissolving white granulated sugar, citric acid and acetic acid in water at 50°C to obtain a blending liquid, uniformly mixing the above fermentation broth and the blending liquid at a ratio of 1:2 (v/v) and homogenizing at the pressure of 20MPa, sterilizing under the temperature of 110°C for 15min, filling to obtain the products of lactobacillus beverage of the present embodiment.

The content of glucan in the lactobacillus beverage enriched with glucan prepared by the present embodiment is determined to be 0.56%, the sweetness is 6.8% that of sucrose, the acidity is 73°T, the content of the fermentation broth in the total amount of the beverage is 33.3% volume percent.

### Embodiment 4

(1) inoculating the seed liquid Z4 in an amount of 4.0% (v/v) into the fermentation medium prepared by the above method, that is the fermentation medium S4, wherein the ratio of mass of sucrose to volume of tomato juice is 1g:20mL, the concentration of the tomato juice in the tomato juice aqueous solution is 60%, and the pH value is 8.0; adopting aeration in a fermentor under the temperature of 25°C for 12h to obtain the fermentation broth after fermentation. The concentration of the glucan in the fermentation broth is determined to be 0.81% (w/v).
(2) completely dissolving white granulated sugar, citric acid and tartaric acid in water at 50°C to obtain a blending liquid, uniformly mixing the above fermentation broth and the blending liquid at a ratio of 1:0.5 (v/v) and homogenizing at the pressure of 25MPa, sterilizing under the temperature of 125°C for 5min, filling to obtain the products of lactobacillus beverage of the present embodiment.

The content of glucan in the lactobacillus beverage enriched with glucan prepared by the present embodiment is determined to be 0.54%, the sweetness is 8.5% that of sucrose, the acidity is 77°T, the content of the fermentation broth in the total amount of the beverage is 66.6% volume percent.

### Embodiment of effect 1 Tests of products taste and preferences degree

Taking the products of embodiment1∼4 as experimental objects to test the products taste. The number of people in the test is 50. Tasting method: tasting by the way of anonymous scoring; scoring the color, degree of acidity and sweetness, flavor, mouthfeel, nutrition of the products separately by 20-scale for each aspect, calculating the average score and the total score and recording the statistical result in Table 1.

Meanwhile, counting the number of people on preferences for each single product in according to the given suggestions of the overall preferences for products and recording the statistical result in Table 2.

**Table 1 Statistic table of result data of testing products taste**

| Index | Embodiment 1 | Embodiment 2 | Embodiment 3 | Embodiment 4 |
|---|---|---|---|---|
| Color | 19 | 17 | 18 | 16 |
| Degree of acidity and sweetness | 19 | 18 | 18 | 19 |
| Flavor | 19 | 20 | 19 | 20 |
| Mouthfeel | 20 | 20 | 20 | 20 |
| Nutrition | 19 | 20 | 19 | 20 |
| Total score | 96 | 95 | 94 | 95 |

**Table 2 Statistic table of result data of testing preferences degree**

| Preferences degree | Embodiment 1 | Embodiment 2 | Embodiment 3 | Embodiment 4 |
|---|---|---|---|---|
| Like | 45 | 43 | 40 | 42 |
| Good | 4 | 4 | 5 | 4 |
| Acceptable | 1 | 3 | 5 | 4 |
| Dislike | - | - | - | - |

In general, the glucan beverage of the present invention can be accepted by most consumers on the aspects of flavor, mouthfeel and nutrition from the statistical result of the tests of products taste and preferences degree.

### Embodiment of effect 2 Experiment of stability of products system

Taking the products of embodiment1∼4 as experimental objects to observe the stability of products system in different placing time under the room temperature and the observed result are shown in Table 3.

**Table 3 Statistic result of stability of embodiments' products system**

| Placing time | Embodiment 1 | Embodiment 2 | Embodiment 3 | Embodiment 4 |
|---|---|---|---|---|
| 1 day | Good condition | Good condition | Good condition | Good condition |
| 15 day | Good condition | Good condition | Good condition | Good condition |
| 30 day | Good condition | Good condition | Good condition | Good condition |
| 45 day | Good condition | Good condition | Good condition | Good condition |
| 60 day | 0.1mm of water layer separated on the top, free of precipitate in the bottom | Good condition | Good condition | Good condition |
| 75 day | 0.2mm of water layer separated on the top, free of precipitate in the bottom | 0.1mm of water layer separated on the top, free of precipitate in the bottom | Good condition | 0.1mm of water layer separated on the top, free of precipitate in the bottom |
| 90 day | 0.3mm of water layer separated on the top, free of precipitate in the bottom | 0.2mm of water layer separated on the top, free of precipitate in the bottom | 0.1mm of water layer separated on the top, free of precipitate in the bottom | 0.1mm of water layer separated on the top, free of precipitate in the bottom |

The glucan beverage of the present invention has good stability during the placing time for a period of 90 days under the room temperature without the phenomena of unacceptable stratification and protein precipitation from the result of the above table.

## Claims

1. A method for preparing a glucan beverage is characterized as comprising the following steps:
(1) inoculating fermentation bacterial species of *Leuconostoc mesenteroides* into a fermentation medium, and carrying out aerobic cultivation to obtain a fermentation broth;
(2) uniformly mixing the fermentation broth and a blending liquid containing a sweetener and an acidulant, and homogenizing and sterilizing;
wherein the fermentation medium contains sucrose and tomato juice aqueous solution; the concentration of the tomato juice in the tomato juice aqueous solution is 40%∼ 100% volume percent; the pH of the fermentation medium is adjusted to 6.0∼8.0 with a base; and the volume percent of the content of the fermentation broth in the total amount of the glucan beverage is 15.5%∼66.6%.

2. The preparation method according to claim 1, **characterized in that** the ratio of mass of sucrose to volume of tomato juice is 1g:20mL∼1g:5mL.

3. The preparation method according to claim 2, **characterized in that** the ratio of mass of sucrose to volume of tomato juice is 1g:10mL∼1g:5mL.

4. The preparation method according to claim 3, **characterized in that** the ratio of mass of sucrose to volume of tomato juice is 3g:20mL.

5. The preparation method according to at least one of claims 1 to 4, **characterized in that** the concentration of the tomato juice in the tomato juice aqueous solution is 100% volume percent.

6. The preparation method according to at least one of claims 1 to 4, **characterized in that** the pH of the fermentation medium is adjusted to 7.0 with a base.

7. The preparation method according to claim 6, **characterized in that** the base is one or more of Na₂CO₃, NaHCO₃ and NaOH.

8. The preparation method according to at least one of claims 1 to 7, **characterized in that** the tomato juice in the tomato juice aqueous solution is obtained by adopting the following steps of: washing and peeling ripe tomatoes, mechanical breaking and separating to obtain a supernatant; wherein the separating is one or more of filtering, suction filtering and centrifuging; the filter medium is gauze or nonwoven; the centrifuging means centrifuging at 2000g∼3000g for 5min∼30min.

9. The preparation method according to at least one of claims 1 to 8, **characterized in that** the fermentation medium is obtained by adopting the following steps of: uniformly mixing and dissolving the sucrose and the tomato juice aqueous solution, and sterilizing under the temperature of 95∼125C for 5min∼30min.

10. The preparation method according to claim 9, **characterized in that** the sterilizing time is 20min∼30min.

11. The preparation method according to at least one of claims 1 to 10, **characterized in that** the fermentation bacterial species in the step (1) is one or more of Leuconostocmesenteroides LM 57, Leuconostocmesenteroides LM 79, Leuconostocmesenteroides LD 106 and Leuconostocmesenteroides BD 1710 under the accession number CGMCC NO.6432.

12. The preparation method according to at least one of claims 1 to 11, **characterized in that** the fermentation bacterial species is inoculated as seed liquid in the process of inoculating in the step (1), wherein the number of living bacteria is 1.0×10⁹∼3.0×10⁹CFU/mL.

13. The preparation method according to at least one of claims 1 to 12, **characterized in that** the fermentation bacterial species is inoculated in an amount of 0.5%∼4.0% in the step (1), wherein the percentage is the volume of seed liquid to the volume of fermentation medium;
the temperature of aerobic cultivation in the step (1) is 25°C∼34°C; the time required for the aerobic cultivation is 12h∼54h; the aerobic cultivation is carried out by shaking culture or adopting aeration in a fermentor.

14. The preparation method according to claim 13, **characterized in that** the fermentation bacterial species is inoculated in an amount of 2.0%∼4.0% in the step (1), wherein the percentage is the volume of seed liquid to the volume of fermentation medium;
the temperature of aerobic cultivation in the step (1) is 25°C∼31°C; the time required for the aerobic cultivation is 30h∼54h.

15. The preparation method according to claim 14, **characterized in that** the temperature of aerobic cultivation in the step (1) is 28°C ; the time required for the aerobic cultivation is 48h.

16. The preparation method according to at least one of claims 1 to 15, **characterized in that** the sweetener in the step (2) is one or more of white granulated sugar, syrup and artificial sweetener; wherein the artificial sweetener is one or more of aspartame, sodium cyclamate and acesulfame; the amount of the artificial sweetener used is such that the sweetness of the glucan beverage is 5%∼10% that of sucrose; the acidulant is one or more of citric acid, malic acid, tartaric acid, lactic acid and acetic acid; the titration acidity of the glucan beverage is adjusted in a range of 70°T∼80°T with the amount of the acidulant used;
the homogenizing in the step (2) is homogenized in a range of 15∼ 30Mpa; the temperature of the sterilizing is in a range of 95°C∼125°C; the required time of the sterilizing is in a range of 5min∼30min.

17. A glucan beverage prepared by the method for preparing the glucan beverage according to at least one of claims 1 to 16 wherein:
- the glucan content in the glucan beverage is higher than or equal to 0.5 % (W/V),
- the sweetness of the glucan beverage is 5% -10% that of sucrose,
- the fermentation broth in the total amount of the glucan beverage is 15.5 -66.6 volume percent,
- the acidity of the glucan beverage is adjusted in a range of 70°T -80°T.

## Patentansprüche

1. Ein Verfahren zur Herstellung eines Glucangetränks, **dadurch gekennzeichnet, dass** es folgende Schritte umfasst:
(1) Inokulieren von Fermentationsbakterienspezies von *Leuconostoc mesenteroides* in ein Fermentationsmedium und Durchführen einer aeroben Kultivierung zum Erhalten einer Fermentationsbrühe;
(2) gleichmäßiges Mischen der Fermentationsbrühe und einer Mischflüssigkeit, die einen Süßstoff und ein Säuerungsmittel enthält, sowie Homogenisieren und Sterilisieren;
wobei das Fermentationsmedium Saccharose und eine wässrige Tomatensaftlösung enthält; die Konzentration des Tomatensaftes in der wässrigen Tomatensaftlösung 40 % ∼ 100 Vol.-% beträgt; der pH-Wert des Fermentationsmediums mit einer Base auf 6,0-8,0 eingestellt wird; und der Volumenanteil des Inhalts der Fermentationsbrühe in der Gesamtmenge des Glucangetränks 15,5 %∼66,6 % beträgt.

2. Herstellungsverfahren nach Anspruch 1, **dadurch gekennzeichnet, dass** das Verhältnis von Masse der Saccharose zum Volumen des Tomatensaftes 1 g : 20 ml∼1 g : 5 ml beträgt.

3. Herstellungsverfahren nach Anspruch 2, **dadurch gekennzeichnet, dass** das Verhältnis von Masse der Saccharose zum Volumen des Tomatensaftes 1 g : 10 ml∼1 g : 5 ml beträgt.

4. Herstellungsverfahren nach Anspruch 3, **dadurch gekennzeichnet, dass** das Verhältnis von Masse der Saccharose zum Volumen des Tomatensaftes 3 g : 20 ml beträgt.

5. Herstellungsverfahren nach mindestens einem der Ansprüche 1 bis 4, **dadurch gekennzeichnet, dass** die Konzentration des Tomatensaftes in der wässrigen Tomatensaftlösung 100 Vol.-% beträgt.

6. Herstellungsverfahren nach mindestens einem der Ansprüche 1 bis 4, **dadurch gekennzeichnet, dass** der pH-Wert des Fermentationsmediums mit einer Base auf 7,0 eingestellt wird.

7. Herstellungsverfahren nach Anspruch 6, **dadurch gekennzeichnet, dass** die Base eine oder mehrere von Na₂CO₃, NaHCO₃ und NaOH ist.

8. Herstellungsverfahren nach mindestens einem der Ansprüche 1 bis 7, **dadurch gekennzeichnet, dass** der Tomatensaft in der wässrigen Tomatensaftlösung durch folgende Schritte erhalten wird: Waschen und Schälen reifer Tomaten, mechanisches Brechen und Trennen, um einen Überstand zu erhalten; wobei die Trennung eines oder mehrere von Filtern, Saugfiltern und Zentrifugieren ist; das Filtermedium Gaze oder Vlies ist; das Zentrifugieren die Zentrifugation bei 2000 g∼3000 g für 5 min∼30 min bedeutet.

9. Herstellungsverfahren nach mindestens einem der Ansprüche 1 bis 8, **dadurch gekennzeichnet, dass** das Fermentationsmedium durch folgende Schritte erhalten wird: gleichmäßiges Mischen und Lösen der Saccharose und der wässrigen Tomatensaftlösung, und Sterilisieren bei der Temperatur von 95-125 °C für 5 min∼30 min.

10. Herstellungsverfahren nach Anspruch 9, **dadurch gekennzeichnet, dass** die Sterilisationszeit 20 min∼30 min beträgt.

11. Herstellungsverfahren nach mindestens einem der Ansprüche 1 bis 10, **dadurch gekennzeichnet, dass** die Fermentationsbakterienspezies im Schritt (1) eine oder mehrere von Leuconostocmesenteroides LM 57, Leuconostocmesenteroides LM 79, Leuconostocmesenteroides LD 106 und Leuconostocmesenteroides BD 1710 unter der Zugangsnummer CGMCC Nr. 6432 ist.

12. Herstellungsverfahren nach mindestens einem der Ansprüche 1 bis 11, **dadurch gekennzeichnet, dass** die Fermentationsbakterienspezies als Inokulatflüssigkeit im Prozess des Inokulierens in dem Schritt (1) inokuliert wird, wobei die Anzahl der lebenden Bakterien 1,0x10⁹∼3,0x10⁹ KBE/ml ist.

13. Herstellungsverfahren nach mindestens einem der Ansprüche 1 bis 12, **dadurch gekennzeichnet, dass** die Fermentationsbakterienspezies in dem Schritt (1) in einer Menge von 0,5 %∼4,0 % inokuliert wird, wobei der Prozentsatz das Volumen der Inokulatflüssigkeit zu dem Volumen des Fermentationsmediums ist; die Temperatur der aeroben Kultivierung in dem Schritt (1) 25 °C∼34 °C beträgt; die für die aerobe Kultivierung erforderliche Zeit 12 h∼54 h beträgt; die aerobe Kultivierung durch Schüttelkultur oder Belüftung in einem Fermenter durchgeführt wird.

14. Herstellungsverfahren nach Anspruch 13, **dadurch gekennzeichnet, dass** die Fermentationsbakterienspezies in dem Schritt (1) in einer Menge von 2,0 %∼4,0 % inokuliert wird, wobei der Prozentsatz das Volumen der Inokulatflüssigkeit zu dem Volumen des Fermentationsmediums ist;
die Temperatur der aeroben Kultivierung in dem Schritt (1) 25 °C∼31 °C beträgt; die für die aerobe Kultivierung erforderliche Zeit 30 h∼54 h beträgt.

15. Herstellungsverfahren nach Anspruch 14, **dadurch gekennzeichnet, dass** die Temperatur der aeroben Kultivierung im Schritt (1) 28 °C beträgt; die für die aerobe Kultivierung benötigte Zeit 48 h beträgt.

16. Herstellungsverfahren nach mindestens einem der Ansprüche 1 bis 15, **dadurch gekennzeichnet, dass** der Süßstoff in dem Schritt (2) eines oder mehrere aus weißem Kristallzucker, Sirup und künstlichem Süßstoff ist; wobei der künstliche Süßstoff eines oder mehrere aus Aspartam, Natriumcyclamat und Acesulfam ist; die Menge des verwendeten künstlichen Süßstoffs so bemessen ist, dass die Süße des Glucangetränks 5 %∼10 % der von Saccharose beträgt; das Säuerungsmittel eines oder mehrere von Zitronensäure, Äpfelsäure, Weinsäure, Milchsäure und Essigsäure ist; die Titrationssäurezahl des Glucangetränks in einem Bereich von 70 °T∼80 °T mit der Menge des verwendeten Säuerungsmittels eingestellt wird;
das Homogenisieren in dem Schritt (2) in einem Bereich von 15-30 Mpa homogenisiert wird; die Temperatur des Sterilisierens in einem Bereich von 95 °C ∼ 125 °C liegt; die erforderliche Zeit des Sterilisierens in einem Bereich von 5 min ∼ 30 min liegt.

17. Glucangetränk, hergestellt nach dem Verfahren zur Herstellung des Glucangetränks nach mindestens einem der Ansprüche 1 bis 16, wobei:
- der Glucangehalt im Glucangetränk höher oder gleich 0,5 % (W/V) ist,
- die Süße des Glucangetränks 5 % - 10 % der von Saccharose beträgt,
- die Fermentationsbrühe in der Gesamtmenge des Glucangetränks 15,5 - 66,6 Volumenanteil beträgt
- die Säurezahl des Glucangetränks in einem Bereich von 70 °T -80 °T eingestellt wird.

## Revendications

1. Procédé de préparation d'une boisson au glucane est **caractérisé en ce qu'**il comprend les étapes suivantes consistant à :
(1) inoculer une espèce bactérienne de fermentation de *Leuconostoc mesenteroides* dans un milieu de fermentation, et réaliser une culture aérobie pour obtenir un bouillon de fermentation ;
(2) mélanger uniformément le bouillon de fermentation et un liquide de mélange contenant un édulcorant et un acidulant, et homogénéiser et stériliser ;
dans lequel le milieu de fermentation contient une solution aqueuse de saccharose et de jus de tomate ; la concentration du jus de tomate dans la solution aqueuse de jus de tomate est de 40 %∼100 % en pourcentage volumique ; le pH du milieu de fermentation est ajusté à 6,0-8,0 avec une base ; et le pourcentage volumique de la teneur en bouillon de fermentation dans la quantité totale de la boisson au glucane est de 15,5 %∼66,6 %.

2. Procédé de préparation selon la revendication 1, **caractérisé en ce que** le rapport de masse de saccharose sur le volume de jus de tomate est de 1 g:20 ml∼1 g:5 ml.

3. Procédé de préparation selon la revendication 2, **caractérisé en ce que** le rapport de masse de saccharose sur le volume de jus de tomate est de 1 g:10 ml∼1 g:5 ml.

4. Procédé de préparation selon la revendication 3, **caractérisé en ce que** le rapport de masse de saccharose sur le volume de jus de tomate est de 3 g:20 ml.

5. Procédé de préparation selon au moins l'une des revendications 1 à 4, **caractérisé en ce que** la concentration du jus de tomate dans la solution aqueuse de jus de tomate est de 100 % en pourcentage volumique.

6. Procédé de préparation selon au moins l'une des revendications 1 à 4, **caractérisé en ce que** le pH du milieu de fermentation est ajusté à 7,0 avec une base.

7. Procédé de préparation selon la revendication 6, **caractérisé en ce que** la base est un ou plusieurs parmi Na₂CO₃, NaHCO₃ et NaOH.

8. Procédé de préparation selon au moins l'une des revendications 1 à 7, **caractérisé en ce que** le jus de tomate dans la solution aqueuse de jus de tomate est obtenu en adoptant les étapes suivantes consistant à: laver et peler les tomates mûres, briser et séparer mécaniquement pour obtenir un surnageant ; dans lequel la séparation est un ou plusieurs parmi la filtration, la filtration par aspiration et la centrifugation ; le milieu du filtre est la gaze ou non tissé ; les moyens de centrifugation centrifugeant à 2000 g∼3000 g pendant 5 min∼30 min.

9. Procédé de préparation selon au moins l'une des revendications 1 à 8, **caractérisé en ce que** le milieu de fermentation est obtenu en adoptant les étapes suivantes consistant à : mélanger uniformément et dissoudre la solution aqueuse de saccharose et de jus de tomate, et stériliser à la température de 95-125 °C pendant 5 min∼30 min.

10. Procédé de préparation selon la revendication 9, **caractérisé en ce que** la durée de stérilisation est de 20 min∼30 min.

11. Procédé de préparation selon au moins l'une des revendications 1 à 10, **caractérisé en ce que** l'espèce bactérienne de fermentation à l'étape (1) est une ou plusieurs parmi Leuconostocmesenteroides LM 57, Leuconostocmesenteroides LM 79, Leuconostocmesenteroides LD 106 et Leuconostocmesenteroides BD 1710 avec le numéro de dépôt CGMCC NO. 6432.

12. Procédé de préparation selon au moins l'une des revendications 1 à 11, **caractérisé en ce que** l'espèce bactérienne de fermentation est inoculée comme liquide de graine dans le processus d'inoculation à l'étape (1) dans laquelle le nombre de bactéries vivantes est de 1,0x10⁹∼3,0x10⁹CFU/ml.

13. Procédé de préparation selon au moins l'une des revendications 1 à 12, **caractérisé en ce que** l'espèce bactérienne de fermentation est inoculée dans une quantité de 0,5 %∼4,0 % à l'étape (1), dans laquelle le pourcentage est le volume de liquide de graine sur le volume de milieu de fermentation ;
la température de culture aérobie à l'étape (1) est de 25 °C∼34°C ; la durée nécessaire pour la culture aérobie est de 12 h∼54 h ; la culture aérobie est réalisée en secouant la culture ou en adoptant l'aération dans un fermenteur.

14. Procédé de préparation selon la revendication 13, **caractérisé en ce que** l'espèce bactérienne de fermentation est inoculée dans une quantité de 2,0 %∼4,0 % à l'étape (1), dans laquelle le pourcentage est le volume de liquide de graine sur le volume de milieu de fermentation ;
la température de culture aérobie à l'étape (1) est de 25 °C∼31 °C ; la durée nécessaire pour la culture aérobie est de 30 h∼54 h.

15. Procédé de préparation selon la revendication 14, **caractérisé en ce que** la température de culture aérobie à l'étape (1) est de 28 °C ; la durée nécessaire pour la culture aérobie est de 48 h.

16. Procédé de préparation selon au moins l'une des revendications 1 à 15, **caractérisé en ce que** l'édulcorant à l'étape (2) est un ou plusieurs parmi le sucre blanc granulé, le sirop et l'édulcorant artificiel ; dans lequel l'édulcorant artificiel est un ou plusieurs parmi l'aspartame, le cyclamate de sodium et l'acésulfame ; la quantité d'édulcorant artificiel utilisée est telle que le goût sucré de la boisson au glucane est de 5 %∼10 % celui du saccharose ; l'acidulant est un ou plusieurs parmi l'acide citrique, l'acide malique, l'acide tartrique, l'acide lactique et l'acide acétique ; l'acidité de titrage de la boisson au glucane est ajustée dans une plage de 70 °T∼80 °T avec la quantité de l'acidulant utilisée ;
l'homogénéisation à l'étape (2) est homogénéisée dans une plage de 15-30 Mpa ; la température de la stérilisation est dans une plage de 95 °C∼125 °C ; la durée nécessaire de la stérilisation est dans une plage de 5 min∼30 min.

17. Boisson au glucane préparée par le procédé de préparation de la boisson au glucane selon au moins l'une des revendications 1 à 16 dans laquelle :
- la teneur en glucane dans la boisson au glucane est plus importante ou égale à 0,5 % (P/V),
- le goût sucré de la boisson au glucane est de 5 % -10 % celui du saccharose,
- le bouillon de fermentation dans la quantité totale de la boisson au glucane est de 15,5 - 66,6 de pourcentage volumique
- l'acidité de la boisson au glucane est ajustée dans une plage de 70 °T -80 °T.
